# FASCICULE DE BREVET EUROPEEN

(11) **EP 3 828 494 B1**
(45) Date de publication et mention de la délivrance du brevet: **15.02.2023**
(21) Numéro de dépôt: 20200175.6
(22) Date de dépôt: 06.10.2020
(51) Int. Cl.: G01B 11/14, G01B 11/26, G06T 7/00, B64C 27/00, B64F 5/40, G01M 1/16

(54) **DISPOSITIF ET PROCEDE D'IDENTIFICATION D'UNE TRAJECTOIRE D'UNE PALE D'UN ROTOR POUR EQUILIBRAGE**
VORRICHTUNG UND VERFAHREN ZUR IDENTIFIZIERUNG DER BEWEGUNGSBAHN EINES ROTORBLATTS ZUM AUSWUCHTEN
DEVICE AND METHOD FOR IDENTIFYING A TRAJECTORY OF A ROTOR BLADE FOR BALANCING

(30) Priorité: 28.11.2019 FR 1913355
(43) Date de publication de la demande: 02.06.2021
(73) Titulaire: Airbus Helicopters, 13725 Marignane Cedex (FR)
(72) Inventeur: JOUVE, Jérémy, 13560 SENAS (FR)
(74) Mandataire: GPI Brevets

(56) Documents cités:
- EP-A1- 0 112 031
- FR-A1- 2 482 720
- FR-A1- 2 640 037
- GB-A- 1 116 748
- KR-B1- 101 600 424
- US-A- 2 964 849

## Description

La présente invention concerne un dispositif et un procédé d'identification d'une trajectoire d'une pale d'un rotor en rotation en vue par exemple d'un d'équilibrage d'un rotor muni d'une pluralité de pales, et notamment d'un rotor d'un giravion par exemple.

En effet, le rotor de sustentation d'un giravion, et éventuellement de propulsion dans le cas d'un hélicoptère, comporte une pluralité de pales.

A l'issue de leur fabrication, les pales présentent des écarts en termes de répartition massique et de caractéristiques aérodynamiques. Les différentes tolérances de fabrication peuvent être réduites, mais des écarts peuvent subsister d'une pale à l'autre.

Les différences de fabrication entres les pales d'un même rotor peuvent conduire à des comportements qui diffèrent d'une pale à l'autre lorsque les pales sont montées sur le rotor. En particulier, des pales légèrement différentes vont produire des portances qui elles-aussi diffèrent. Deux pales d'un même rotor peuvent alors générer deux portances différentes à un même azimut et avec un même angle de pas. Le rotor n'est alors pas parfaitement équilibré.

De plus, le remplacement d'équipements du rotor peut aussi conduire à un déséquilibrage. A titre d'exemple, remplacer un amortisseur usagé peut induire un déséquilibrage du rotor.

Des ajustements sont alors entrepris pour équilibrer le rotor lors d'opérations régulières de maintenance et de réglage.

L'équilibrage d'un rotor peut être réalisé en ajustant divers paramètres.

Ainsi, les pales peuvent être pourvues de petits « volets » compensateurs, dénommés « tab » par l'homme du métier, sur leur bord de fuite. Toute modification du calage d'un tel volet par rapport au profil aérodynamique de la pale génère une force qui modifie la portance de la pale. En ajustant le calage des tabs, il est possible de réaliser un équilibrage aérodynamique de chaque pale. Cet ajustement peut être réalisé en braquant manuellement au moins un tab d'un angle approprié pour compenser des écarts de portance entre deux pales.

De manière complémentaire ou alternative, des éléments pesants peuvent être utilisés pour ajuster la masse de la pale et/ou la position de son centre de gravité.

De manière complémentaire ou alternative, la longueur d'une bielle de pas commandant le pas d'une pale peut être ajustée. L'allongement ou le raccourcissement d'une bielle de pas peut induire une augmentation ou une réduction de la portance générée par la pale.

Pour déterminer si la portance d'une ou plusieurs pales doit être ajustée, la portance exercée sur chaque pale peut être mesurée. Toutefois, un tel procédé s'avère très complexe.

Dès lors d'autres systèmes réalisent des mesures indirectes de cette portance.

Le document FR 2871438 B1 décrit un procédé pour régler un rotor déficient à l'aide d'un réseau de neurones. Ce procédé détermine les réglages à effectuer notamment en fonction d'accélérations.

D'autres systèmes de mesures indirectes visent à évaluer la hauteur de chaque pale lors de sa rotation, cette hauteur étant une image de la portance générée par la pale à quelques approximations près. Ces systèmes peuvent aussi permettre de visualiser la trajectoire d'une pale en rotation. Les mesures peuvent être effectuées au sol et en vol, les ajustements pouvant notamment être choisis en fonction de la phase de vol pendant laquelle un écart a été relevé. Par exemple, si des mesures réalisées en vol en palier signalent des écarts de hauteurs, un opérateur peut utiliser les tabs pour régler le rotor. De plus, si des mesures réalisées en vol stationnaire signalent des écarts de hauteurs, un opérateur peut utiliser les bielles de pas pour régler le rotor.

Un système de mesure indirecte de la portance peut comprendre des lampes stroboscopiques synchronisées sur le régime rotor ainsi que des petites cibles réfléchissantes disposées sur les pales pour visualiser la trajectoire des pales. Par exemple, chaque cible peut prendre une forme d'un carré, d'un rond, d'un triangle et peut être contenue dans un carré de moins de deux centimètres de coté pour avoir une taille aussi petite que possible.

Un autre système de mesure indirecte de la portance peut comprendre des caméras dédiées synchronisées sur le régime rotor pour synchroniser la prise d'images avec le passage des pales et par exemple avec des lampes stroboscopiques.

Un autre système de mesure indirecte de la portance peut comprendre un capteur de hauteur, par exemple de type capteur à ultrasons, associé à un déclenchement synchronisé avec le régime rotor.

Les réglages adéquats peuvent être déterminés par un opérateur en utilisant des abaques fournissant les ajustements à réaliser en fonction des écarts de hauteurs relevés et de la phase de vol.

Ces systèmes à stroboscope, caméra ou capteurs de hauteur sont intéressants mais nécessitent d'être synchronisés avec le régime rotor pour visualiser chaque pale. Une telle synchronisation peut être réalisée à l'aide d'un capteur magnétique agencé dans un repère non tournant et d'un pointeur magnétique solidaire en rotation du rotor. Par exemple, un capteur magnétique est agencé sur un plateau non tournant d'un ensemble de plateaux cycliques pour détecter le passage d'un organe en métal agencé au contraire sur le plateau tournant de cet ensemble de plateaux cyclique. Pour notamment permettre des mesures en vol, des câbles doivent alors cheminer du capteur magnétique jusqu'à la caméra ou aux capteurs de hauteur voire aux lampes stroboscopiques présents par exemple dans la cabine ce qui s'avère délicat sur un aéronef.

Bien qu'efficaces, ces systèmes demeurent donc complexes avec l'installation de moyens de mesure dans un repère tournant. L'agencement dans un repère tournant de moyens de mesure devant éventuellement être reliés à des systèmes présents dans une cabine peut s'avérer onéreux en raison du temps d'installation et d'immobilisation de l'aéronef. De plus, ces systèmes imposent de réaliser un vol technique.

Le document KR 101600424 décrit un dispositif muni d'un instrument photographique prenant des photographies d'extrémités de pales, lesdites extrémités pouvant comprendre des autocollants colorés ou peints.

Les documents FR 2482720 et EP 0112031 décrivent l'utilisation de bandes réfléchissantes.

Les documents US 2964849, FR 2640037 et GB 1116748 sont aussi connus.

La présente invention a alors pour objet de proposer un dispositif visant à être simple et utilisable en vol sans nécessiter l'agencement délicat d'équipements complexes et câblés sur un rotor et notamment sans nécessiter une synchronisation avec le régime rotor.

L'invention vise ainsi un dispositif pour identifier une trajectoire de chaque pale d'un rotor, par exemple à des fins d'équilibrage du rotor, le rotor comprenant une pluralité de pales en rotation, ledit dispositif comportant un capteur d'images et un calculateur relié au capteur d'images.

Ce dispositif comporte au moins une cible configurée pour être attachée à une dite pale et être visible par le capteur d'images dans un champ de vision du capteur d'images, ladite cible comprenant au moins deux bandes colorées allongées parallèles.

La fréquence d'acquisition d'images à l'aide du capteur d'images et la fréquence de rotation des pales ne sont éventuellement pas synchronisées entre elles. La fréquence d'acquisition d'images à l'aide du capteur d'images est parfois dénommée « taux de rafraichissement ». Il est néanmoins possible d'acquérir des images et d'identifier les pales sur les images sans une telle synchronisation.

En effet, le capteur d'images peut acquérir en continu des images, et non pas à une fréquence synchronisée sur la fréquence de rotation du rotor. Le capteur d'images est configuré pour acquérir en continu des images, sur une période de mesure, suivant le taux de rafraichissement de ce capteur d'images et indépendamment d'une fréquence de rotation du rotor.

Un capteur d'images peut ainsi acquérir suffisamment d'images de toutes les pales dans le champ de vision du capteur d'images durant une période de mesure relativement faible afin d'évaluer des différences de hauteurs utiles pour établir une mesure indirecte de la portance des pales.

Ainsi des images sont prises avec le capteur d'images par exemple en continu et non pas en fonction d'une synchronisation avec le rotor. De fait, certaines images ne contiennent pas une pale et certaines images contiennent au moins une partie d'une pale, et par exemple une partie de l'extrémité d'une pale. A titre illustratif, avec un capteur d'images ayant un taux de rafraichissement de 240 images par seconde et un angle de champs de 30 degrés, le capteur d'images étant agencé dans un cockpit d'un hélicoptère ayant trois pales tournant à une vitesse de 390 tours par minutes, il suffit d'une seconde pour que chaque pale soit visible dans une vingtaine d'images. Le nombre de passage de chaque pale dans le champ de vision du capteur d'images augmente linéairement en fonction de la période de mesure.

Ce dispositif permet donc d'obtenir lors de la période de mesure un nombre conséquent d'images contenant au moins une portion de chaque pale et un nombre conséquent d'images ne contenant pas une pale.

A l'aide de ces images, le calculateur peut identifier chaque pale particulière sur les images acquises à l'aide d'au moins une cible. Un opérateur ou le calculateur peut alors estimer le trajet suivi par un point caractéristique de chaque pale dans le champ de vision du capteur d'images pour en déduire les ajustements à effectuer.

Chaque cible du dispositif selon l'invention comporte au moins deux bandes colorées allongées et parallèles pour permettre son repérage et l'indentification de la pale associée. L'expression « bande colorée allongée » désigne une forme présentant une couleur permettant de l'identifier et une longueur importante selon au moins une direction, une bande colorée pouvant par exemple présenter un trait de faible épaisseur.

En effet, un capteur d'images présente un temps d'obturation incompatible avec l'utilisation de cibles usuelles en l'absence de synchronisation. La vitesse d'obturation d'un capteur d'images est usuellement automatiquement calculée par le capteur d'images en fonction des conditions de luminosité, et implique un temps de prise de vue se situant aux alentours de 1/5000ème voire 1/1000ème de seconde par exemple. Or une extrémité libre d'une pale effectue une rotation autour de l'axe de rotation du rotor à une vitesse relativement importante, par exemple de l'ordre d'environ 200 mètres par seconde. Pour chaque image prise, durant le temps de prise de vue l'extrémité de la pale parcourt donc une distance d'environ 4 à 20 centimètres suivant les conditions de la prise de vue. Par conséquent, une cible géométrique usuelle de petite taille est floue sur l'image prise, voire invisible du fait de la luminosité et de la saturation du capteur d'images induite par l'arrière-plan très lumineux, ce qui ne permet pas d'identifier la pale en l'absence de synchronisation.

Selon l'invention, chaque bande colorée est allongé et donc suffisamment longue pour être toujours présente, au moins partiellement, dans une zone de superposition durant la prise d'image. La zone de superposition est une zone qui est couverte par la cible à chaque instant durant le temps de prise de vue. Dès lors, la cible est dimensionnée pour toujours présenter un tronçon présent dans la zone de superposition. L'image enregistrée au niveau de la bande colorée n'est ainsi plus saturée par l'arrière-plan et la bande colorée devient visible. La couleur de la bande colorée peut permettre de plus de la distinguer de la pale et du ciel notamment. La couleur de la bande colorée peut aussi permettre de la repérer facilement par une méthode automatisée de repérage d'une couleur sur une image, et donc un algorithme de reconnaissance d'une couleur appliqué par le calculateur. Une telle méthode peut être plus simple et plus rapide à mettre en oeuvre qu'une méthode de reconnaissance de forme.

Dès lors, le dispositif comporte au moins une cible innovante permettant d'identifier une pale particulière portant cette cible sur des images acquises sans synchronisation avec la fréquence de rotation du rotor.

Le calculateur ou un opérateur peut en déduire la trajectoire suivie par chaque pale et des écarts de hauteur entre les pales pour déterminer les ajustements à effectuer, par exemple en exploitant de manière usuelle des abaques mémorisés ou via un réseau de neurones.

En particulier, le calculateur peut déterminer une courbe de tendance par pale à l'aide du nuage de points caractéristiques relatif à cette pale selon une méthode mathématique éventuellement usuelle. En outre, le calculateur peut déterminer un écart moyen entre les courbes de tendance. Chaque écart moyen est l'image d'un écart de hauteurs entre deux pales et donc d'un écart de portances entre ces deux pales. Le calculateur élabore alors des suggestions de réglage par exemple par le biais d'une méthode connue, et éventuellement en sollicitant un réseau de neurones mémorisé, en fonction des écarts moyens relevés.

Ce dispositif permet ainsi d'estimer statistiquement la hauteur de passage des pales dans un espace scruté par le capteur d'images par analyse d'images. Le dispositif ne nécessite éventuellement pas de synchroniser un ou plusieurs éléments avec le régime rotor.

De plus, ce dispositif peut permettre d'effectuer des mesures d'opportunité, par exemple lors d'un vol commercial, car aucun prérequis n'est nécessaire contrairement à des dispositifs nécessitant des vols techniques.

Le dispositif peut de plus comporter une ou plusieurs des caractéristiques qui suivent.

Selon un aspect, le dispositif peut comporter un appareil portable multifonction incluant ledit calculateur et ledit capteur d'images.

Le dispositif peut comprendre un appareil simple, et par exemple un appareil portable multifonction du commerce tel qu'un téléphone multifonction dénommé « smartphone » en langue anglaise, une tablette multifonction ou encore un ordinateur portable. En effet, des appareils portables multifonction récents sont munis d'au moins un capteur d'images apte à prendre des photographies de bonne qualité à un taux de rafraichissement élevé, par exemple de l'ordre de 240 à 480 images par seconde.

Selon un aspect, ladite au moins une cible peut comporter un support portant lesdites bandes colorées.

Par exemple, la cible comporte un support, éventuellement sensiblement en forme de L, muni d'une première paroi à fixer à la pale et d'une deuxième paroi portant les bandes colorées.

Par exemple, chaque bande colorée est un autocollant collé au support ou est peinte sur le support.

Par exemple, la deuxième paroi peut avoir une hauteur faible inférieure à un centimètre et une longueur importante de l'ordre de 6 à 8 centimètres, la bande colorée ayant sensiblement les mêmes dimensions. La cible peut alors avoir une masse négligeable par exemple de l'ordre de 3 grammes et peut être installée sur une pale sans disposition particulière.

Eventuellement, le support peut comprendre un unique orifice pour être attaché à une pale par serrage, ledit orifice étant décentré par rapport au support.

Le support, et notamment la première paroi, peut être volontairement asymétrique pour provoquer une mise en drapeau de la cible en cas de desserrage de cette cible. Cette caractéristique peut tendre à limiter les risques de flottement de la cible dans cette situation.

Selon un aspect, chaque bande colorée peut présenter une longueur selon une direction tangentielle configurée pour être sensiblement tangente à un cercle centré sur un axe de rotation du rotor.

Eventuellement, ladite longueur peut être supérieure à deux centimètres.

Eventuellement, ladite longueur peut être fonction d'au moins une vitesse d'obturation du capteur d'images ou d'une vitesse de rotation du rotor ou d'une distance séparant ladite cible et ledit capteur d'images dans un champ de captation d'images du capteur d'images.

La longueur peut être fonction d'un ou plusieurs des paramètres précités. Par exemple, un procédé peut prévoir de déterminer ladite longueur en appliquant une formule donnant la longueur en fonction d'un ou plusieurs des paramètres précités, cette formule pouvant être établie par essais et/ou simulations et/ou calculs.

Eventuellement, chaque bande colorée peut avoir une hauteur selon une direction parallèle à l'axe de rotation, ladite longueur étant supérieure à ladite hauteur.

Comme indiquée précédemment, la longueur peut par exemple être de l'ordre de 6 à 8 centimètres, la hauteur étant de l'ordre du centimètre voire de l'ordre de 5 millimètres ou moins.

Selon un aspect, chaque bande colorée peut présenter une couleur distincte d'une couleur du ciel.

Par exemple, la bande colorée peut avoir une couleur qui n'est ni du bleu ni du blanc ni du gris voire ni du noir pour être distinguée du ciel.

Selon un aspect, ladite au moins une bande colorée peut présenter une couleur distincte d'une couleur d'une pale à équiper de ladite cible.

Cette caractéristique vise à distinguer la cible de la pale pour identifier cette pale.

Selon un aspect, chaque bande colorée peut présenter une couleur rouge.

Une telle couleur permet à la cible de bien ressortir sur les images acquises.

Selon la revendication 1, au moins une cible comporte au moins deux dites bandes colorées parallèles.

A l'instar d'un code barre, la cible peut comprendre plusieurs bandes colorées pour distinguer deux cibles de deux pales différentes. Par exemple, une cible d'une première pale comporte une unique bande colorée, une deuxième cible d'une deuxième pale comporte deux bandes colorées et ainsi de suite.

Les bandes colorées d'une ou plusieurs cibles peuvent aussi avoir des couleurs différentes.

Selon un aspect, le calculateur peut être indépendant dudit rotor, ledit calculateur étant configuré pour évaluer au moins un écart de hauteurs entre lesdites pales indépendamment de la fréquence de rotation du rotor et en exploitant des images transmises par ledit capteur d'images.

L'expression « calculateur peut être indépendant dudit rotor » signifie que le calculateur n'effectue aucune synchronisation avec le rotor.

Outre un dispositif, l'invention vise un aéronef comprenant un rotor muni d'une pluralité de pales mobiles en rotation autour d'un axe de rotation, cet aéronef comportant un dispositif selon l'invention, au moins une pale portant une dite cible.

Selon une première réalisation, chaque pale comporte une dite cible, deux cibles de deux pales différentes étant visuellement différentes.

Par exemple, deux cibles différentes comportent deux nombres de bandes colorées différents.

Selon une deuxième réalisation, une seule pale comporte une dite cible. En effet, en connaissant le nombre de pales, il est possible d'identifier chaque pale sur chaque image en identifiant de façon initiale une même pale.

Par exemple, en fonction du taux de rafraichissement, plusieurs images successives peuvent comprendre une même pale. Le flux d'images comporte alors successivement une série d'images comprenant une même pale puis une série d'images ne comprenant pas une pale. En identifiant une pale, il est aisé d'en déduire quelle pale est visible sur une image.

Selon un exemple, pour un rotor tripale le flux d'images comprend de fait une première série d'images d'une même première pale, une série d'images sans pale, une deuxième série d'images d'une même deuxième pale, une série d'images sans pale, une troisième série d'images d'une même troisième pale puis une série d'images sans pale et ainsi de suite. En identifiant une pale sur une série d'images, on en déduit de fait quelles pales apparaissent sur les autres série d'images. Par exemple, si la deuxième série d'images d'une même deuxième pale contient la cible, la pale apparaissant sur la première série d'images est la pale se trouvant avant la deuxième pale portant la cible selon le sens de rotation du rotor et la pale apparaissant sur la troisième série d'images est la pale se trouvant après la deuxième pale portant la cible selon le sens de rotation du rotor.

Selon la revendication 12, l'invention vise aussi un procédé pour fabriquer un dispositif selon l'invention pour identifier une trajectoire d'au moins une pale et/ou équilibrer un rotor. Ce procédé comporte au moins les étapes suivantes :
- détermination d'une zone de superposition à couvrir au moins partiellement par la cible dans toutes les positions successives d'une pale durant un temps de prise de vue du capteur d'images,
- détermination d'une longueur de chaque bande colorée pour que chaque bande colorée soit présente dans la zone de superposition à chaque instant durant ledit temps de prise de vue.

Le procédé comporte une étape de fabrication d'une cible comprenant au moins deux bandes colorées ayant ladite longueur.

L'invention et ses avantages apparaîtront avec plus de détails dans le cadre de la description qui suit avec des exemples donnés à titre illustratif en référence aux figures annexées qui représentent :
[Fig 1] la figure 1, une vue d'un dispositif selon l'invention,
[Fig 2] la figure 2, une vue d'une cible comprenant une unique bande colorée,
[Fig 3] la figure 3, une vue d'une cible selon la figure 2 agencée sur une pale,
[Fig 4] la figure 4, un schéma illustrant une cible à deux bandes colorées,
[Fig 5] la figure 5, un logigramme illustrant le procédé selon l'invention, et
[Fig 6] la figure 6, un schéma illustrant la détection du passage d'une pale pendant un temps de prise de vue,

Les éléments présents dans plusieurs figures distinctes sont affectés d'une seule et même référence.

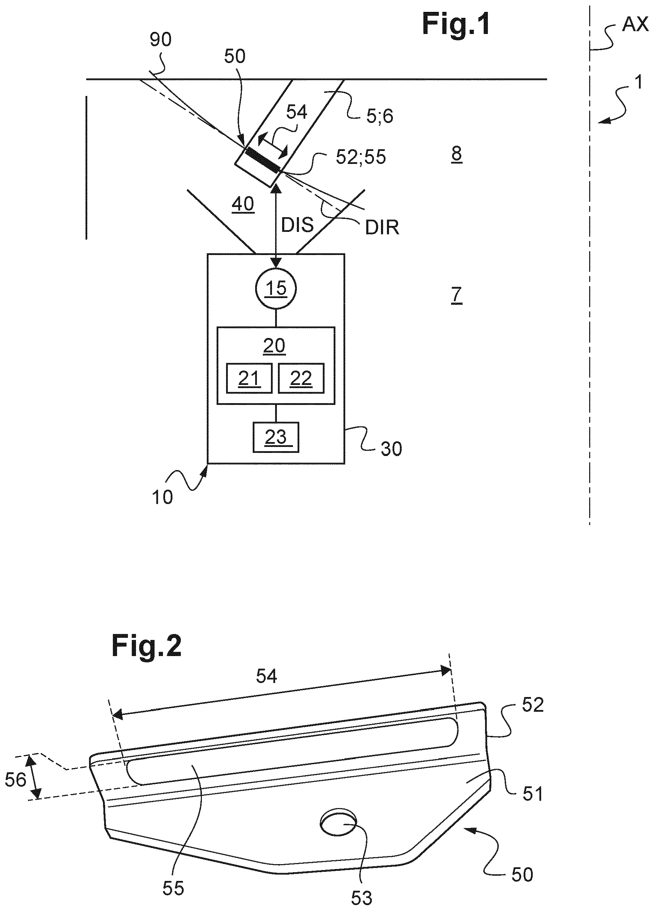

La figure 1 présente un dispositif 10 pour déterminer une trajectoire d'une pale et par exemple pour réaliser un équilibrage d'un rotor 5 mobile en rotation autour d'un axe de rotation AX d'un giravion 1, le rotor 5 comprenant une pluralité de pales 6. Les pales 6 sont susceptibles de ne pas être strictement identiques en raison de tolérances de fabrication. Le procédé d'équilibrage vise à régler le rotor 5 pour tendre notamment à obtenir la même portance avec chaque pale 6 pour un même angle de pas et un même azimut afin de limiter par exemple les vibrations du rotor 5.

Le dispositif 10 comporte un capteur d'images 15 capable de prendre des photographies d'un espace 40. Le capteur d'images 15 peut par exemple prendre la forme d'un capteur photographique pouvant être sollicité à haute vitesse. Selon un exemple, le capteur d'images 15 peut prendre la forme d'un capteur apte à prendre 240 photographies par seconde.

Le capteur d'images 15 peut acquérir en continu des images sur une période de mesure suivant le taux de rafraichissement de ce capteur d'images 15, et non pas selon une fréquence synchronisée sur la fréquence de rotation du rotor 5.

Par ailleurs, le dispositif 10 comporte un calculateur 20 relié au capteur d'images 15 pour acquérir et traiter des images saisies par le capteur d'images 15 voire pour effectuer au moins une opération visant à visualiser une trajectoire suivie par chaque pale 6 et des écarts de hauteur entre les pales 6. Le calculateur 20 peut comprendre par exemple au moins un processeur 21 et au moins une mémoire 22, au moins un circuit intégré et par exemple un circuit connu sous l'expression anglaise « Field Programmable Gate Arrays », au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, le dispositif 10 peut comprendre un écran 23 relié au calculateur 20.

Un tel dispositif 10 peut comprendre un appareil portable 30 muni de l'écran 23 et/ou du calculateur 20 et/ou du capteur d'images 15. Par exemple, l'appareil portable 30 peut être un « smartphone » de dernière génération muni d'un capteur d'images 15 ayant un taux de rafraichissement élevé. Par exemple, le capteur d'images 15 peut avoir un angle de champs de l'ordre de 30° pour photographier l'espace 40 requis.

L'appareil portable 30 peut être agencé de manière à visualiser l'extrémité des pales 6 en rotation, voire notamment l'intrados des pales 6. Par exemple, un opérateur peut s'assoir dans une cabine 7 de l'aéronef afin de pouvoir visualiser les pales 6 avec l'appareil portable 30 au travers d'une vitre 8.

Par ailleurs, le dispositif 10 comporte au moins une cible 50 solidarisée à une pale 6 et par exemple au niveau d'une extrémité libre d'une pale 6. Plusieurs pales 6, voire chaque pale 6, peuvent comprendre une cible. Selon une autre réalisation, une unique pale 6 comprend une cible, les autres pales n'ayant aucune cible. Chaque cible 50 est positionnée de manière à être visible par le capteur d'images 15 lorsque la pale 6 traverse l'espace 40 couvert par le champ de vision du capteur d'images 15.

La cible 50 comprend au moins deux bandes colorées 55 allongées et parallèles, à savoir par exemple plus longues que hautes.

Chaque bande colorée 55 présente une longueur 54 selon une direction tangentielle DIR sensiblement tangente à un cercle 90 centré sur l'axe de rotation AX du rotor 5.

De plus, chaque bande colorée 55 présente une hauteur 56, illustrée sur la figure 2, selon une direction parallèle à l'axe de rotation AX. La longueur 54 est favorablement supérieure à la hauteur 56. La hauteur 56 peut en effet être minimisée afin que la cible puisse avoir un impact aérodynamique minimal.

La figure 2 illustre une cible 50 comprenant une unique bande colorée 55. En tant que telle, ladite cible n'est pas incluse dans l'objet des revendications.

Quel que soit le nombre de bande colorée 55, la cible peut comprendre une bande colorée éventuellement fixée à une pale avec un adhésif, sans support additionnel

Alternativement, selon la figure 2 la cible 50 peut comporter un support. Le support peut comprendre une première paroi 51 à fixer à une pale 6. En particulier, la première paroi 51 peut être disposée contre l'intrados de la pale 6 et/ou à proximité de l'extrémité libre de la pale 6. La première paroi 51 comporte alors une fixation permettant de la solidariser à une pale 6. Selon l'exemple illustré, la fixation comprend un orifice 53 ménagé dans la première paroi 51 pour serrer la première paroi 51 à une pale 6 par serrage à l'aide d'une vis ou d'un rivet par exemple. En présence d'un unique orifice 53, cet orifice 53 peut être décentré par rapport à la première paroi 51 pour obtenir une mise en drapeau de la cible en cas de desserrage.

La cible 50 peut de plus comprendre une deuxième paroi 52, éventuellement solidaire de la première paroi 51. Selon l'exemple illustré, la première paroi 51 est orthogonale à la deuxième paroi 52 pour former une pièce en L.

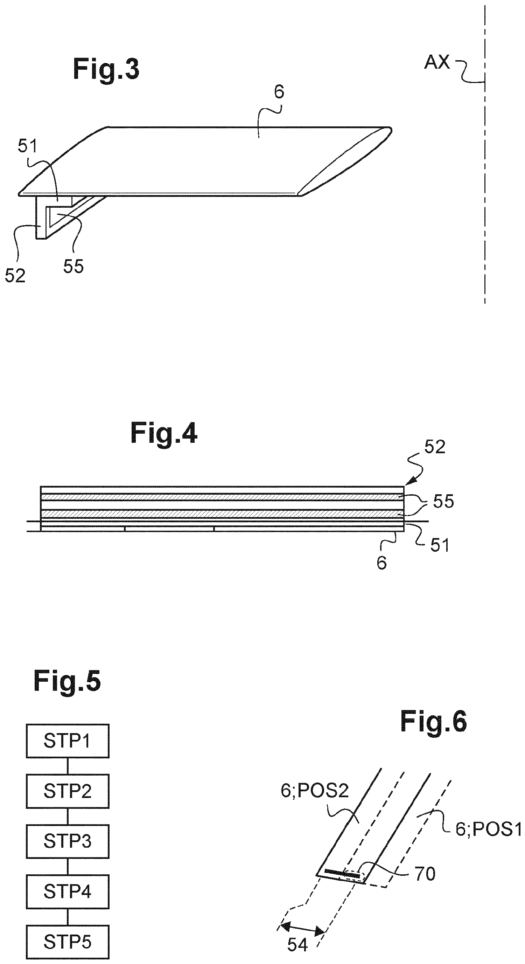

Chaque bande colorée 55 est ainsi disposée sur la deuxième paroi 52 pour être visible par le capteur d'images 15 lors de la rotation de la pale 6. Ainsi et en référence à la figure 3, chaque bande colorée 55 peut être agencée en regard de l'axe de rotation AX par exemple.

En référence à la figure 4, chaque bande colorée 55 peut être monochrome et/ou peut avoir une couleur distincte d'une nuance de couleur du ciel et/ou de la pale 6. Par exemple, la bande colorée 55 a une couleur rouge.

Selon un autre aspect, la bande colorée 55 peut avoir une longueur 54 très supérieure à sa hauteur 56. Par exemple, la longueur 54 peut être supérieure à deux centimètres voire à trois centimètres. Selon un exemple, la longueur 54 peut être sensiblement équivalente à la corde d'un profil de la pale 6 au niveau de la cible 50. On rappelle que la corde d'un profil représente la longueur d'un segment reliant le bord d'attaque et le bord de fuite du profil. Selon un autre exemple, la longueur 54 est fonction d'au moins une vitesse d'obturation du capteur d'images 15 ou d'une vitesse de rotation du rotor 5 ou d'une distance DIS séparant ladite cible 50 et ledit capteur d'images 15 dans un champ de captation d'images 40 du capteur d'images 15.

Par ailleurs, la cible 50 peut avoir plusieurs bandes colorées. La figure 4 illustre une cible 50 ayant deux bandes colorées 55 parallèles.

La figure 5 illustre un procédé pour fabriquer un tel dispositif 10 et notamment une cible 50 afin de pouvoir réaliser un équilibrage d'un rotor.

Durant une étape de fabrication STP1, le procédé comporte une étape STP1.1 de détermination d'une zone de superposition couverte par la cible pour toutes les positions successives d'une pale 6 durant un temps de prise de vue du capteur d'images 15, à savoir toujours couverte par la cible durant l'intégralité du temps de prise de vue.

En référence à la figure 6, lors de l'acquisition d'une image à l'aide du capteur d'images 15, une pale 6 peut se déplacer dans l'espace 40 durant le temps de prise de vue d'une première position POS1 illustrée en pointillés jusqu'à une deuxième position POS2 illustrée avec des traits continus. Le procédé comporte une étape STP1.1 de détermination d'une zone de superposition 70 par exemple à l'aide d'un calculateur d'imageries. Dès lors, le calculateur d'imageries détermine durant une étape STP1.2 la longueur 54 que doit avoir la bande colorée 55 pour toujours être dans la zone de superposition 70 durant la période de mesure.

Au moins une cible 50 comprenant au moins deux de ces bandes colorées 55 est alors agencée sur une pale 6.

En référence à la figure 5, le calculateur 20 peut alors être configuré pour appliquer un procédé selon l'invention afin d'estimer un écart de hauteurs des pales 6 et de visualiser la trajectoire suivie par chaque pale 6.

Pour régler le rotor 5, le procédé peut alors comporter une étape d'acquisition d'images STP2 réalisées à l'aide du dispositif 10 et notamment du capteur d'images 15. En particulier, le capteur d'images 15 capture successivement des images dénommées par commodité « images sources » lors de la rotation du rotor 5 durant une période de mesure. Le calculateur 20 peut acquérir les images sources prises par le capteur d'images 15.

Par la suite, le calculateur 20 peut analyser les images pour déterminer quelle pale apparait sur quelle image. A cet effet, le calculateur 20 peut appliquer un algorithme de traitement d'images pour analyser les images sources une par une. Le calculateur 20 peut déterminer quelle pale est visible sur une image source à l'aide des cibles 50, par exemple par une méthode de détection de couleur puis éventuellement par déduction.

Dès lors un opérateur ou le calculateur peut exploiter les images pour en déduire un ou plusieurs ajustements à apporter au rotor 5.

Durant une étape de traitement STP3, le calculateur 20 peut déterminer pour chaque pale 6 une courbe de tendance qui reflète la trajectoire de cette pale dans l'espace 40 à l'aide de chaque image source contenant cette pale. Les courbes de tendance peuvent être affichées sur l'écran 23.

Durant une étape d'évaluation STP4, le calculateur 20 peut déterminer un écart moyen entre chaque courbe de tendance et chaque autre courbe de tendance.

Enfin, durant une étape de suggestion STP5, le calculateur 20 peut déterminer au moins un réglage à réaliser pour équilibrer le rotor en fonction des écarts moyens. Le réglage peut être déterminé par des méthodes usuelles et peut consister à agir sur au moins un tab, au moins un élément pesant et/ou au moins une bielle de pas.

Par exemple, le calculateur émet un signal pour afficher le réglage suggéré sur l'écran 23.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (10) pour identifier une trajectoire de chaque pale (6) d'un rotor (5), le rotor (5) comprenant une pluralité de pales (6) en rotation, ledit dispositif (10) comportant un capteur d'images (15) et un calculateur (20) relié au capteur d'images (15),ledit dispositif (10) comportant au moins une cible (50) configurée pour être attachée à une dite pale (6) et être visible par le capteur d'images (15) dans un champ de vision du capteur d'images (15), ladite cible (50) comprenant au moins une bande colorée (55) allongée, ledit capteur d'images (15) étant configuré pour acquérir en continu des images sur une période de mesure suivant un taux de rafraichissement de ce capteur d'images (15) et indépendamment d'une fréquence de rotation du rotor (5), **caractérisé en ce que** ladite au moins une cible (50) comporte au moins deux dites bandes colorées (55) parallèles.

2. Dispositif selon la revendication 1, **caractérisé en ce que** chaque bande colorée (55) présente une longueur (54) selon une direction tangentielle (DIR) configurée pour être sensiblement tangente à un cercle (90) centré sur un axe de rotation (AX) du rotor (5) et une hauteur (56) selon une direction parallèle à l'axe de rotation (AX), ladite longueur (54) étant supérieure à ladite hauteur (56).

3. Dispositif selon l'une quelconque des revendications 1 à 2, **caractérisé en ce que** chaque bande colorée (55) présente une longueur (54) selon une direction tangentielle (DIR) configurée pour être sensiblement tangente à un cercle (90) centré sur un axe de rotation (AX) du rotor (5), ladite longueur (54) étant supérieure à deux centimètres.

4. Dispositif selon l'une quelconque des revendications 1 à 3, **caractérisé en ce que** chaque bande colorée (55) présente une longueur (54) selon une direction tangentielle (DIR) configurée pour être sensiblement tangente à un cercle (90) centré sur un axe de rotation (AX) du rotor (5), ladite longueur (54) étant fonction d'au moins une vitesse d'obturation du capteur d'images (15) ou d'une vitesse de rotation du rotor (5) ou d'une distance séparant ladite cible (50) et ledit capteur d'images (15) dans un champ de captation d'images du capteur d'images (15).

5. Dispositif selon l'une quelconque des revendications 1 à 4, **caractérisé en ce que** chaque bande colorée (55) présente une couleur rouge.

6. Dispositif selon l'une quelconque des revendications 1 à 5, **caractérisé en ce que** ledit calculateur (20) est indépendant dudit rotor (5), ledit calculateur (20) étant configuré pour évaluer au moins un écart de hauteurs entre lesdites pales (6) indépendamment de la fréquence de rotation du rotor (5) et en exploitant des images transmises par ledit capteur d'images (15).

7. Dispositif selon l'une quelconque des revendications 1 à 6, **caractérisé en ce que** ledit dispositif (10) comporte un appareil portable (30) multifonction incluant ledit calculateur (20) et ledit capteur d'images (15).

8. Dispositif selon l'une quelconque des revendications 1 à 7, **caractérisé en ce que** ladite au moins une cible (50) comporte un support (51, 52) portant les bandes colorées (55), ledit support (51, 52) comprenant un unique orifice (53) pour être attaché à une pale (6) par serrage, ledit orifice (53) étant décentré par rapport au support (51, 52).

9. Aéronef (1) comprenant un rotor (5) muni d'une pluralité de pales (6) mobiles en rotation autour d'un axe de rotation (AX), **caractérisé en ce que** ledit aéronef (1) comporte un dispositif (10) selon l'une quelconque des revendications 1 à 8, au moins une pale (6) portant une dite cible (50).

10. Aéronef selon la revendication 9,
**caractérisé en ce que** chaque pale (6) comporte une dite cible (50), deux cibles (50) de deux pales (6) différentes étant visuellement différentes.

11. Aéronef selon la revendication 9,
**caractérisé en ce qu'**une seule pale (6) comporte une dite cible (50).

12. Procédé pour fabriquer un dispositif (10) selon l'une quelconque des revendications 1 à 8,
**caractérisé en ce que** le procédé comporte au moins les étapes suivantes :
- détermination (STP1.1) d'une zone de superposition (70) à couvrir au moins partiellement par la cible dans toutes les positions successives d'une pale (6) durant un temps de prise de vue du capteur d'images (15), ladite au moins une cible (50) comporte au moins deux dites bandes colorées (55) parallèles
- détermination (STP1.2) d'une longueur (54) de chaque bande colorée (55) pour que chaque bande colorée (55) soit présente dans la zone de superposition (70) à chaque instant durant ledit temps de prise de vue.

## Patentansprüche

1. Vorrichtung (10) zum Identifizieren einer Bewegungsbahn jedes Blattes (6) eines Rotors (5), wobei der Rotor (5) eine Mehrzahl von sich drehenden Blättern (6) umfasst, wobei die Vorrichtung (10) einen Bildsensor (15) und einen mit dem Bildsensor (15) verbundenen Rechner (20) umfasst, wobei die Vorrichtung (10) mindestens ein Ziel (50) umfasst, das konfiguriert ist, um an einem besagten Blatt (6) befestigt zu werden und für den Bildsensor (15) in einem Sichtfeld des Bildsensors (15) sichtbar zu sein, wobei das Ziel (50) mindestens einen langgestreckten Farbstreifen (55) umfasst, wobei der Bildsensor (15) konfiguriert ist, um über einen Messzeitraum kontinuierlich Bilder gemäß einer Auffrischungsrate dieses Bildsensors (15) und unabhängig von einer Drehfrequenz des Rotors (5) zu erfassen,
**dadurch gekennzeichnet, dass** das mindestens eine Ziel (50) mindestens zwei parallele besagte Farbstreifen (55) aufweist.

2. Vorrichtung nach Anspruch 1,
**dadurch gekennzeichnet, dass** jeder Farbstreifen (55) eine Länge (54) in einer tangentialen Richtung (DIR), die konfiguriert ist, um im Wesentlichen tangential zu einem Kreis (90) zu sein, der auf einer Drehachse (AX) des Rotors (5) zentriert ist, und eine Höhe (56) in einer Richtung parallel zu der Drehachse (AX) aufweist, wobei die Länge (54) größer als die Höhe (56) ist.

3. Vorrichtung nach einem der Ansprüche 1 bis 2,
**dadurch gekennzeichnet, dass** jeder Farbstreifen (55) eine Länge (54) in einer tangentialen Richtung (DIR) aufweist, die konfiguriert ist, um im Wesentlichen tangential zu einem Kreis (90) zu sein, der auf einer Drehachse (AX) des Rotors (5) zentriert ist, wobei die Länge (54) größer als zwei Zentimeter ist.

4. Vorrichtung nach einem der Ansprüche 1 bis 3,
**dadurch gekennzeichnet, dass** jeder Farbstreifen (55) eine Länge (54) in einer tangentialen Richtung (DIR) aufweist, die konfiguriert ist, um im Wesentlichen tangential zu einem Kreis (90) zu sein, der auf einer Drehachse (AX) des Rotors (5) zentriert ist, wobei die Länge (54) von mindestens einer Verschlussgeschwindigkeit des Bildsensors (15) oder einer Drehgeschwindigkeit des Rotors (5) oder einem Abstand zwischen dem Ziel (50) und dem Bildsensor (15) in einem Bildaufnahmefeld des Bildsensors (15) abhängig ist.

5. Vorrichtung nach einem der Ansprüche 1 bis 4,
**dadurch gekennzeichnet, dass** jeder Farbstreifen (55) eine rote Farbe aufweist.

6. Vorrichtung nach einem der Ansprüche 1 bis 5,
**dadurch gekennzeichnet, dass** der Rechner (20) unabhängig von dem Rotor (5) ist, wobei der Rechner (20) konfiguriert ist, um unabhängig von der Drehfrequenz des Rotors (5) und unter Auswertung von von dem Bildsensor (15) übertragenen Bildern mindestens einen Höhenunterschied zwischen den Blättern (6) zu bewerten.

7. Vorrichtung nach einem der Ansprüche 1 bis 6,
**dadurch gekennzeichnet, dass** die Vorrichtung (10) ein multifunktionales tragbares Gerät (30) umfasst, das den Rechner (20) und den Bildsensor (15) umfasst.

8. Vorrichtung nach einem der Ansprüche 1 bis 7,
**dadurch gekennzeichnet, dass** das mindestens eine Ziel (50) einen Träger (51, 52) umfasst, der die Farbstreifen (55) trägt, wobei der Träger (51, 52) eine einzelne Öffnung (53) umfasst, um an einem Blatt (6) durch Klemmen befestigt zu werden, wobei die Öffnung (53) in Bezug auf den Träger (51, 52) dezentriert ist.

9. Luftfahrzeug (1) mit einem Rotor (5), der mit einer Mehrzahl von um eine Drehachse (AX) drehbaren Blättern (6) versehen ist,
**dadurch gekennzeichnet, dass** das Luftfahrzeug (1) eine Vorrichtung (10) nach einem der Ansprüche 1 bis 8 aufweist, wobei mindestens ein Blatt (6) ein besagtes Ziel (50) aufweist.

10. Luftfahrzeug nach Anspruch 9,
**dadurch gekennzeichnet, dass** jedes Blatt (6) ein besagtes Ziel (50) aufweist, wobei zwei Ziele (50) von zwei verschiedenen Blättern (6) visuell unterschiedlich sind.

11. Luftfahrzeug nach Anspruch 9,
**dadurch gekennzeichnet, dass** ein einziges Blatt (6) ein besagtes Ziel (50) aufweist.

12. Verfahren zum Herstellen einer Vorrichtung (10) nach einem der Ansprüche 1 bis 8,
**dadurch gekennzeichnet, dass** das Verfahren mindestens die folgenden Schritte umfasst:
- Bestimmen (STP1.1) eines Überlagerungsbereichs (70), der in allen aufeinanderfolgenden Positionen eines Flügels (6) während einer Bildaufnahmezeit des Bildsensors (15) zumindest teilweise durch das Ziel abgedeckt sein soll, wobei das mindestens eine Ziel (50) mindestens zwei parallele Farbstreifen (55) umfasst;
- Bestimmen (STP1.2) einer Länge (54) jedes Farbstreifens (55), so dass jeder Farbstreifen (55) in der Überlagerungszone (70) zu jedem Zeitpunkt während der Bildaufnahmezeit vorhanden ist.

## Claims

1. Device (10) for identifying a trajectory of each blade (6) of a rotor (5), the rotor (5) comprising a plurality of rotating blades (6), said device (10) comprising an image sensor (15) and a computer (20) connected to the image sensor (15), said device (10) comprising at least one target (50) configured to be attached to a said blade (6) and to be visible to the image sensor (15) in a field of view of the image sensor (15), said target (50) comprising at least one elongated coloured strip (55), said image sensor (15) being configured to continuously acquire images over a measurement period according to a refresh rate of the image sensor (15) and independently of a rotational frequency of the rotor (5), **characterised in that** the at least one target (50) comprises at least two parallel said coloured strips (55).

2. Device according to claim 1, **characterised in that** each coloured strip (55) has a length (54) in a tangential direction (DIR) configured to be substantially tangent to a circle (90) centred on an axis of rotation (AX) of the rotor (5), and a height (56) in a direction parallel to the axis of rotation (AX), said length (54) being greater than said height (56).

3. Device according to any one of claims 1 to 2, **characterised in that** each coloured strip (55) has a length (54) in a tangential direction (DIR) configured to be substantially tangent to a circle (90) centred on an axis of rotation (AX) of the rotor (5), said length (54) being greater than two centimetres.

4. Device according to any one of claims 1 to 3, **characterised in that** each coloured strip (55) has a length (54) in a tangential direction (DIR) configured to be substantially tangent to a circle (90) centred on an axis of rotation (AX) of the rotor (5), said length (54) being a function of at least one shutter speed of the image sensor (15) or a rotational speed of the rotor (5) or a distance between the target (50) and the image sensor (15) in an image capture field of the image sensor (15).

5. Device according to one of claims 1 to 4, **characterised in that** each coloured strip (55) is red in colour.

6. Device according to any one of claims 1 to 5, **characterised in that** said computer (20) is independent of said rotor (5), said computer (20) being configured to calculate at least one difference of heights between the blades (6) independently of the rotational frequency of the rotor (5) and by exploiting images transmitted by said image sensor (15).

7. Device according to any one of claims 1 to 6, **characterised in that** said device (10) comprises a multifunction portable apparatus (30) including said computer (20) and said image sensor (15).

8. Device according to any one of claims 1 to 7, **characterised in that** said at least one target (50) comprises a bracket (51, 52) carrying the coloured strips (55), said bracket (51, 52) comprising a single orifice (53) for attachment to a blade (6) by screwing, said orifice (53) being eccentric relative to the bracket (51, 52).

9. Aircraft (1) comprising a rotor (5) provided with a plurality of movable blades (6) rotating about an axis of rotation (AX), **characterised in that** said aircraft (1) comprises a device (10) according to any one of claims 1 to 8, at least one blade (6) carrying a said target (50).

10. Aircraft according to claim 9, **characterised in that** each blade (6) comprises one said target (50), two targets (50) of two different blades (6) being visually different.

11. Aircraft according to claim 9, **characterised in that** a single blade (6) comprises one said target (50).

12. Method for manufacturing a device (10) according to any one of claims 1 to 8, **characterised in that** the method comprises at least the following steps:
- determination (STP1.1) of a superposition area (70) to be covered at least partially by the target in all successive positions of a blade (6) during an exposure time of the image sensor (15), said at least one target (50) comprising at least two said parallel coloured strips (55);
- determination (STP1.2) of a length (54) of each coloured strip (55) so that each coloured strip (55) is present in the superposition area (70) for the entirety of said exposure time.
